# EUROPÄISCHE PATENTANMELDUNG

(11) **EP 3 410 008 A1**
(43) Veröffentlichungstag der Anmeldung: **05.12.2018**
(21) Anmeldenummer: 18174216.4
(22) Anmeldetag: 25.05.2018
(51) Int. Cl.: F22B 1/18, F22D 3/06

(54) **DAMPFERZEUGUNGSVORRICHTUNG**

(30) Priorität: 29.05.2017 DE 102017111620
(71) Anmelder: Viessmann Werke GmbH & Co. KG, 35108 Allendorf (DE)
(72) Erfinder: WEIGEL, Klaus, 35239 Steffenberg-Ogerhörlen (DE)
(74) Vertreter: Wolf, Michael

(57) **Zusammenfassung**

Die Erfindung betrifft eine Dampferzeugungsvorrichtung, umfassend einen mit einem heißen Abgas beheizten und eine Flüssigkeit verdampfenden Dampferzeuger (1), dem über eine erste Strömungsführung (2.1) für das Abgas ein Wärmeübertrager (3) nach- und über eine zweite Strömungsführung (2.2) für die Flüssigkeit der Wärmeübertrager (3) vorgeschaltet ist, wobei ein erster Strömungspfad (3.1) im Wärmeübertrager (3) als Zwischenstück der ersten Strömungsführung (2.1) und ein im Wärmeaustausch mit dem ersten stehender, zweiter Strömungspfad (3.2) im Wärmeübertrager (3) als Zwischenstück der zweiten Strömungsführung (2.2) ausgebildet ist, wobei eine weitere, ebenfalls von der Flüssigkeit durchströmte Strömungsführung (4) vorgesehen und der zweite Strömungspfad (3.2) auch als Zwischenstück dieser weiteren Strömungsführung (4) ausgebildet ist, wobei die weitere Strömungsführung (4) als Teil eines geschlossenen Sekundärkreislaufes (4.2) ausgebildet ist. Nach der Erfindung ist vorgesehen, dass der Sekundärkreislauf (4.2) einen thermisch isolierten Speicher (5) für die Flüssigkeit aufweist.

## Beschreibung

Die Erfindung betrifft eine Dampferzeugungsvorrichtung gemäß dem Oberbegriff des Patentanspruchs 1.

Eine Dampferzeugungsvorrichtung der eingangs genannten Art ist aus dem Patentdokument DE 32 13 837 A1. Eine solche Vorrichtung besteht aus einem mit einem heißen Abgas beheizten und eine Flüssigkeit (Wasser) verdampfenden Dampferzeuger, dem über eine erste Strömungsführung für das Abgas ein Wärmeübertrager (auch Economiser genannt) nach- und über eine zweite Strömungsführung für die Flüssigkeit der Wärmeübertrager vorgeschaltet ist, wobei ein erster Strömungspfad im Wärmeübertrager als Zwischenstück bzw. Teil der ersten Strömungsführung und ein im Wärmeaustausch mit dem ersten stehender, zweiter Strömungspfad im Wärmeübertrager als Zwischenstück bzw. Teil der zweiten Strömungsführung ausgebildet ist. Der genannte Wärmeübertrager dient dabei ersichtlich dazu, Wärmeenergie aus dem Abgas auf die dem Dampferzeuger zugeführte Flüssigkeit zu übertragen.

Der Erfindung liegt die Aufgabe zugrunde eine Dampferzeugungsvorrichtung der eingangs genannten Art zu verbessern. Insbesondere soll der Wirkungsgrad der Vorrichtung weiter verbessert bzw. die Anlageneffizienz gesteigert werden.

Diese Aufgabe ist mit einer Dampferzeugungsvorrichtung der eingangs genannten Art durch die im Kennzeichen des Patentanspruchs 1 aufgeführten Merkmale gelöst.

Nach der Erfindung ist also vorgesehen, dass der Sekundärkreislauf einen thermisch isolierten Speicher für die Flüssigkeit aufweist.

Mit anderen Worten zeichnet sich die erfindungsgemäße Dampferzeugungsvorrichtung somit dadurch aus, dass über den Wärmeübertrager aus dem Abgas abgeführte Wärme im Sekundärkreislauf gespeichert werden kann. Hierdurch kann der Wirkungsgrad der Vorrichtung gesteigert werden.

Andere vorteilhafte Weiterbildungen der erfindungsgemäßen Dampferzeugungsvorrichtung ergeben sich aus den abhängigen Patentansprüchen.

Der Vollständigkeit halber wird darauf hingewiesen, dass es bekannt ist, dem Wärmeübertrager, also dem sogenannten Economiser, einen Zusatz-Wärmeübertrager nachzuschalten. Die erfindungsgemäße Lösung vermeidet demgegenüber aber zusätzliche Druckverluste, weist einen geringen Platzbedarf auf und ist auch bei Bestandsanlagen einfach nachrüstbar.

Die erfindungsgemäße Dampferzeugungsvorrichtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

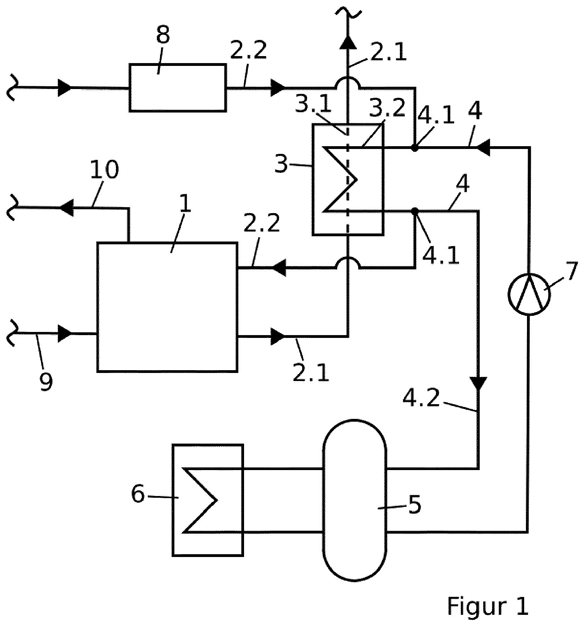

Es zeigt
- Figur 1: schematisch die erfindungsgemäße Dampferzeugungsvorrichtung mit der weiteren Strömungsführung.

Die in der einzigen Figur schematisch dargestellte Dampferzeugungsvorrichtung besteht zunächst in bekannter Weise aus einem mit einem heißen Abgas beheizten und eine Flüssigkeit verdampfenden Dampferzeuger 1, den man auch als Abhitzekessel bezeichnet, dessen Leistungsbereich vorzugsweise etwa zwischen 0,3 bis 200 t Dampf pro Stunde und dessen Betriebsdruck vorzugsweise zwischen 2 bis 100 bar beträgt.

Das Abgas, das mit einem Massenstrom von vorzugsweise 0,5 bis 50 kg/s und einer Temperatur von 350 bis 600° zugeführt wird, stammt dabei zum Beispiel von einer Gasturbine, einem Gasmotor oder einem sonstigen geeigneten thermischen Erzeuger.

Das Verhältnis zwischen dem Abgasmassenstrom und dem erzeugten Dampfstrom ist vorzugsweise größer zwei. Als Flüssigkeit wird Wasser verwendet.

Wie aus der einzigen Figur ersichtlich, ist dem Dampferzeuger 1 über eine erste Strömungsführung 2.1 für das Abgas ein Wärmeübertrager 3 nach- und über eine zweite Strömungsführung 2.2 für die Flüssigkeit der Wärmeübertrager 3 vorgeschaltet, wobei die Strömungsgeschwindigkeit der Flüssigkeit bzw. des Wassers im Wärmeübertrager 3 bei der dargestellten Ausführungsform vorzugsweise zwischen 0,9 bis 1,3 m/s beträgt. Weiterhin ist in diesem Zusammenhang bevorzugt vorgesehen, dass der Wärmeübertrager 3 als Rippenrohrwärmeübertrager (siehe hierzu auch https://de.wikipedia.org/w/index.php?title=Rippenrohr&oldid= 147757929) ausgebildet ist.

Weiterhin ist, wie ersichtlich, bei der erfindungsgemäßen Dampferzeugungsvorrichtung in bekannter Weise vorgesehen, dass ein erster Strömungspfad 3.1 im Wärmeübertrager 3 als Zwischenstück der ersten Strömungsführung 2.1 und ein im Wärmeaustausch mit dem ersten stehender, zweiter Strömungspfad 3.2 im Wärmeübertrager 3 als Zwischenstück der zweiten Strömungsführung 2.2 ausgebildet ist.

Ferner ist bei der dargestellten Ausführungsform in an sich bekannter Weise bevorzugt vorgesehen, dass die zweite Strömungsführung 2.2 eine vorzugsweise thermische Entgasungseinrichtung 8 für die Flüssigkeit mit dem Wärmeübertrager 3 hydraulisch verbindend ausgebildet ist.

Ferner ist vorgesehen, dass eine weitere, ebenfalls von der Flüssigkeit durchströmte Strömungsführung 4 vorgesehen und der zweite Strömungspfad 3.2 auch als Zwischenstück dieser weiteren Strömungsführung 4 ausgebildet ist. Wie eingangs erläutert, dient diese weitere Strömungsführung 4 dazu, Wärme des Abgases, die der zum Dampferzeuger 1 geführten Flüssigkeit nicht zuführbar ist, einem anderen Nutzungszweck zuzuführen.

Noch etwas genauer betrachtet, ist hierzu besonders bevorzugt vorgesehen, dass der zweite Strömungspfad 3.2 in Strömungsrichtung der Flüssigkeit gesehen vor und nach dem Wärmeübertrager 3 jeweils eine Schnittstelle 4.1 zur hydraulischen Einbindung der weiteren Strömungsführung 4 aufweist. Diese beiden Schnittstellen 4.1 sind dabei, da sie nur einen geringen Platzbedarf haben, auch bei Bestandsanlagen leicht nachrüstbar.

Bezüglich der weiteren Strömungsführung 4 ist dabei ferner, wie dargestellt, besonders bevorzugt vorgesehen, dass diese als Teil eines geschlossenen, vorzugsweise mit einer Kreislaufpumpe 7 versehenen Sekundärkreislaufes 4.2 ausgebildet ist. Das Massenstromverhältnis des Sekundärkreislaufes 4.2 zum Primärkreislauf, also der zweiten Strömungsführung 2.2, beträgt vorzugsweise 0,2 bis 5.

Um über den Wärmeübertrager 3 aus dem Abgas abgeführte Wärme im Sekundärkreislauf 4.2 speichern zu können, weist dieser ferner, wie dargestellt, erfindungsgemäß einen thermisch isolierten Speicher 5 für die Flüssigkeit auf.

Darüber hinaus ist, um vom Abgas ausgekoppelte Wärme zum Beispiel einem Tertiärkreislauf zuführen zu können, bevorzugt vorgesehen, dass der Sekundärkreislauf 4.2 einen weiteren Wärmeübertrager 6 aufweist.

Nochmals zum Wärmeübertrager 3 zurückkommend, ist bei diesem besonders bevorzugt vorgesehen, dass die beiden Strömungspfade 3.1, 3.2 im Gegenstrom zueinander durchströmt ausgebildet sind. Dies ist dabei besonders bevorzugt dadurch realisiert, dass der erste Strömungspfad 3.1 vom Abgas von unten nach oben und der zweite Strömungspfad 3.2 von der Flüssigkeit von oben nach unten durchströmt ausgebildet ist.

Die erfindungsgemäße Dampferzeugungsvorrichtung funktioniert schließlich wie folgt:
Dem Dampferzeuger 1 wird über einen Abgasanschluss 9 heißes Abgas zugeführt. Dieses wird nach dem Dampferzeuger 1 über die erste Strömungsführung 2.1 dem Wärmeübertrager 3 bzw., genauer genauer ausgedrückt, dem ersten Strömungspfad 3.1 zugeführt.

Ferner wird die im Dampferzeuger 1 in Dampf (siehe hierzu Dampfabfuhranschluss 10) umzusetzende Flüssigkeit von der Entgasungseinrichtung 8 kommend über die zweite Strömungsführung 2.2 ebenfalls dem Wärmeübertrager 3 bzw., genauer ausgedrückt, dem zweiten Strömungspfad 3.2 zugeführt.

Die Aufgabe des Wärmeübertragers 3, wie erwähnt, auch Economiser genannt, besteht nun darin, vom Abgas stammende Wärme über den ersten Strömungspfad 3.1 auf den zweiten Strömungspfad 3.2 zu übertragen, der unter anderem von der von der Entgasungseinrichtung 8 kommenden Flüssigkeit durchströmt wird.

Für den Fall, dass im Abgas mehr Wärme gespeichert ist, als auf die von der Entgasungseinrichtung 8 kommende Flüssigkeit übertragbar ist, sind, wie erläutert, vor und nach dem Wärmeübertrager 3 Schnittstellen 4.1 zu einem Sekundärkreislauf 4.2 vorgesehen, über den weitere Flüssigkeit, insbesondere ebenfalls Wasser, durch den zweiten Strömungspfad 3.2 förderbar ist. Diese Flüssigkeit wird mit Hilfe der Kreislaufpumpe 7 gefördert und dem Speicher 5 und gegebenenfalls einem weiteren Wärmeübertrager 6, der zum Beispiel mit einem Tertiärkreislauf verbunden sein kann, zugeführt. Entscheidend ist dabei also, dass über den Sekundärkreislauf 4.2 dem Abgas ganz gezielt Wärme entzogen werden kann, so dass die Dampferzeugungsvorrichtung sehr effizient bzw. wirkungsgradoptimiert betrieben werden kann.

### Bezugszeichenliste

- 1: Dampferzeuger
- 2.1: erste Strömungsführung
- 2.2: zweite Strömungsführung
- 3: Wärmeübertrager
- 3.1: erster Strömungspfad
- 3.2: zweiter Strömungspfad
- 4: weitere Strömungsführung
- 4.1: Schnittstelle
- 4.2: Sekundärkreislauf
- 5: Speicher
- 6: Wärmeübertrager
- 7: Kreislaufpumpe
- 8: Entgasungseinrichtung
- 9: Abgasanschluss
- 10: Dampfabfuhranschluss

## Patentansprüche

1. Dampferzeugungsvorrichtung, umfassend einen mit einem heißen Abgas beheizten und eine Flüssigkeit verdampfenden Dampferzeuger (1), dem über eine erste Strömungsführung (2.1) für das Abgas ein Wärmeübertrager (3) nach- und über eine zweite Strömungsführung (2.2) für die Flüssigkeit der Wärmeübertrager (3) vorgeschaltet ist, wobei ein erster Strömungspfad (3.1) im Wärmeübertrager (3) als Zwischenstück der ersten Strömungsführung (2.1) und ein im Wärmeaustausch mit dem ersten stehender, zweiter Strömungspfad (3.2) im Wärmeübertrager (3) als Zwischenstück der zweiten Strömungsführung (2.2) ausgebildet ist, wobei eine weitere, ebenfalls von der Flüssigkeit durchströmte Strömungsführung (4) vorgesehen und der zweite Strömungspfad (3.2) auch als Zwischenstück dieser weiteren Strömungsführung (4) ausgebildet ist, wobei die weitere Strömungsführung (4) als Teil eines geschlossenen Sekundärkreislaufes (4.2) ausgebildet ist,
**dadurch gekennzeichnet,**
**dass** der Sekundärkreislauf (4.2) einen thermisch isolierten Speicher (5) für die Flüssigkeit aufweist.

2. Dampferzeugungsvorrichtung nach Anspruch 1,
**dadurch gekennzeichnet,**
**dass** der zweite Strömungspfad (3.2) in Strömungsrichtung der Flüssigkeit gesehen vor und nach dem Wärmeübertrager (3) jeweils eine Schnittstelle (4.1) zur hydraulischen Einbindung der weiteren Strömungsführung (4) aufweist.

3. Dampferzeugungsvorrichtung nach Anspruch 1 oder 2,
**dadurch gekennzeichnet,**
**dass** der Sekundärkreislauf (4.2) einen weiteren Wärmeübertrager (6) aufweist.

4. Dampferzeugungsvorrichtung nach einem der Ansprüche 1 bis 3,
**dadurch gekennzeichnet,**
**dass** der Sekundärkreislauf (4.2) mit einer Kreislaufpumpe (7) versehen ist.

5. Dampferzeugungsvorrichtung nach einem der Ansprüche 1 bis 4,
**dadurch gekennzeichnet,**
**dass** die beiden Strömungspfade (3.1, 3.2) im Gegenstrom zueinander durchströmt ausgebildet sind.

6. Dampferzeugungsvorrichtung nach einem der Ansprüche 1 bis 5,
**dadurch gekennzeichnet,**
**dass** der erste Strömungspfad (3.1) vom Abgas von unten nach oben und der zweite Strömungspfad (3.2) von der Flüssigkeit von oben nach unten durchströmt ausgebildet ist.

7. Dampferzeugungsvorrichtung nach einem der Ansprüche 1 bis 6,
**dadurch gekennzeichnet,**
**dass** der Wärmeübertrager (3) als Rippenrohrwärmeübertrager ausgebildet ist.

8. Dampferzeugungsvorrichtung nach einem der Ansprüche 1 bis 7,
**dadurch gekennzeichnet,**
**dass** die zweite Strömungsführung (2.2) eine Entgasungseinrichtung (8) für die Flüssigkeit mit dem Wärmeübertrager (3) hydraulisch verbindend ausgebildet ist.
